# EUROPEAN PATENT SPECIFICATION

(11) **EP 3 805 969 B1**
(45) Date of publication and mention of the grant of the patent: **06.03.2024**
(21) Application number: 19826805.4
(22) Date of filing: 15.03.2019
(51) Int. Cl.: G06F 21/60, G06F 21/31, G06F 21/62

(54) **SAFE OPERATION METHOD AND SYSTEM FOR STORAGE DATA**
SICHERES BETRIEBSVERFAHREN UND SYSTEM FÜR SPEICHERDATEN
PROCÉDÉ ET SYSTÈME D'EXPLOITATION SÛRE DE DONNÉES DE MÉMOIRE

(30) Priority: 25.06.2018 CN 201810662749
(43) Date of publication of application: 14.04.2021
(73) Proprietor: Hunan Goke Microelectronics Co., Ltd., Changsha, Hunan 410131 (CN)
(72) Inventor: YANG, Wanyun, Changsha, Hunan 410131 (CN)
(74) Representative: Manitz Finsterwald Patent- und Rechtsanwaltspartnerschaft mbB
(86) International application number: PCT/CN2019/078366
(87) International publication number: WO 2020/001078

(56) References cited:
- EP-A2- 1 975 839
- CN-A- 106 095 468
- CN-A- 106 095 468
- CN-A- 107 066 868
- CN-A- 107 092 838
- CN-A- 109 033 848
- US-A1- 2012 311 314
- HONG SHUANGXI ET AL: "Personal Privacy Protection Framework Based on Hidden Technology for Smartphones", IEEE ACCESS, vol. 5, 12 May 2017 (2017-05-12), pages 6515-6526, XP011649332, DOI: 10.1109/ACCESS.2017.2695561 [retrieved on 2017-05-12]

## Description

### TECHNICAL FIELD

The present disclosure relates to the field of information technology, and particularly to a secure execution method and system for stored data.

### BACKGROUND

Data security storage and applications have gradually been recognized by users, but how to conveniently use secure storage devices with encryption functions and how to seamlessly integrate with existing application scenarios are key factors to determine whether a storage solution of an encrypted storage device can be accepted by a user.

At present, as for the securely encrypted storage devices with authentication included in the market, data is stored in a cipher text on a medium of the securely encrypted storage device; and before accessing the data, the device needs to authenticate the identity of the user; after the authentication is passed, the device is unlocked and the data can be accessed. The securely encrypted storage device with authentication needs to check the identity of the host user and only allows a legitimate user to access the hard disk data, which has a certain degree of security. As for the securely encrypted storage device with authentication, since an internal data encryption key is strictly protected by a user identity key, the correct data encryption key cannot be obtained without the correct user login key, so the security of user data is guaranteed to the greatest extent.

However, since the securely encrypted storage device with authentication requires the host side to enter the user identity key, such input interface is usually based on the program running on the operating system OS to provide a man-machine interface, and then the identity key inputted by the user is imported into the storage device through the storage interface between the host and the device. After the identity key is verified by the storage device, the host can access the data stored on the storage device. Because the data stored on the storage device cannot be accessed correctly before unlocking, it is determined that the operating system and the program that provides the unlocking interface cannot be directly stored on the securely encrypted storage device with authentication that needs to be unlocked. In other words, the storage device with authentication security can only be used as a data disk, rather than a system disk. Accordingly, in order to store the operating system and the program that provides the unlocking interface on the securely encrypted storage device with authentication, the hard disk needs to be unlocked in advance. For example, a program with an authentication interface is put in the BIOS, and is unlocked before reading data from the securely encrypted storage device in the BIOS phase, and then the system is loaded. However, this requires a customized BIOS (that is, an extended BIOS function), which is almost impossible considering the differences of various BIOS vendors, and also requires the user to manually enter an identity key to unlock the hard disk, which has a dissatisfied operating experience.

The document EP 1 975 839 A2 discloses an information processing apparatus limiting access to a storage medium from outside, which includes unlock command obtaining means for obtaining, from an authentication unit configured separately from the information processing apparatus, a unlock command requesting release of inhibition of access to the storage medium, and also an authentication mode ID for identifying an authentication mode of the authentication unit, authentication data supplying means for supplying the authentication unit with authentication data used as sample data indicating that a user is verified in an authentication processing of a user instructing access to the storage medium, the authentication data being corresponding to the authentication mode ID obtained together with the unlock command from the unlock command obtaining means, authentication result obtaining means for obtaining, from the authentication unit, an authentication result of the authentication processing performed by using the authentication data supplied from the authentication data supplying means, authentication result confirming means for confirming contents of the authentication result, and release means for releasing inhibition of access to the storage medium from outside when, as a result of confirmation made by the authentication result confirming means, the user is authenticated as being verified.

### SUMMARY

In view of this, the purpose of embodiments of the present disclosure is to provide a secure execution method and system for stored data, to address the above problem. The present invention is set out in the appended claims.

In the first aspect, an embodiment of the present disclosure provides a secure execution method for stored data, including:
loading a security management program pre-stored in a first storage device when the first storage device is detected;
executing the security management program and acquiring pre-stored encrypted identity information;
transmitting the encrypted identity information to the first storage device;
loading system data after the first storage device decrypts the identity information and verifies the identity information successfully, and executing an operating system according to the system data;
wherein the first storage device comprises a first storage area and a second storage area, the first storage device is configured to make an externally visible space be the first storage area after starting up; and the first storage area is configured to pre-store the security management program, and return any data when a size of an external access data address is greater than a size of the first storage area; the second storage area at this moment is in a locked state and is external invisible; the second storage area is an actual externally usable storage space, and is visible and usable after unlocking; the loading the security management program pre-stored in the first storage device when the first storage device is detected comprises:
   loading the security management program pre-stored in the first storage area when the first storage device is detected;
   the secure execution method for stored data further comprises:
   before loading the system data after the first storage device decrypts the identity information and verifies the identity information successfully, and executing the operating system according to the system data,
   decrypting and verifying, by the first storage device, the encrypted identity information, and unlocking the second storage area if the encrypted identity information is verified successfully.

In the second aspect, an embodiment of the present disclosure provides a secure execution system for stored data, the host is configured to load a security management program pre-stored in the first storage device when the first storage device is detected; the first storage device comprises a first storage area and a second storage area; the first storage device is configured to make an externally visible space be the first storage area after starting up; and the first storage area is configured to pre-store the security management program, and return any data when a size of an external access data address is greater than a size of the first storage area; the second storage area at this moment is in a locked state and is external invisible; the second storage area is an actual externally usable storage space, and is visible and usable after unlocking;
the host is configured to execute the security management program and acquire pre-stored encrypted identity information;
the host is configured to transmit the encrypted identity information to the first storage device;
the first storage device is configured to decrypt and verify the identity information;
the host is further configured to load system data after the first storage device decrypts the identity information and verifies the identity information successfully, and execute an operating system according to the system data;
the host is further configured to load the security management program pre-stored in the first storage area when the first storage device is detected; and
the first storage device is further configured to decrypt and verify the encrypted identity information, and unlock the second storage area if the encrypted identity information is verified successfully, before loading the system data after the first storage device decrypts the identity information and verifies the identity information successfully, and executing the operating system according to the system data.

Compared with the prior art, in the secure execution method and system for stored data provided by the present disclosure, the security management program pre-stored in the first storage device is loaded when the first storage device is detected; the security management program is executed and the pre-storage encrypted identity information is acquired; the encrypted identity information is transmitted to the first storage device; the system data is loaded after the first storage device decrypts the identity information and verifies the identity information successfully, and finally the operating system is executed according to the system data. Accordingly, there is no need to extend the BIOS while implementing the secure execution of the operating system, and there is no manual intervention, so the user experience is high; in addition, the security management program is pre-stored in the first storage device, the storage space of the host is saved.

In order to make the above-mentioned objectives, features and advantages of the present disclosure clearer and easier to understand, preferred embodiments are detailed below with reference to accompanying drawings.

### BRIEF DESCRIPTION OF THE DRAWINGS

In order to make the objectives, the technical solutions, and advantages of the embodiments of the present disclosure clearer, the technical solutions in the embodiments of the present disclosure will be described clearly and completely in conjunction with the accompanying drawings in the embodiments of the present disclosure. Obviously, the described embodiments are merely some of the embodiments in the present disclosure, not all the embodiments. The components in the embodiments of the present disclosure generally described and illustrated in the drawings herein can be arranged and designed in various different configurations. Therefore, the following detailed description of the embodiments of the present disclosure provided in the accompanying drawings is not intended to limit the scope of the protection of the present disclosure, but merely represents selected embodiments of the present disclosure. Based on the embodiments of the present disclosure, all other embodiments obtained by those of ordinary skill in the art without creative work shall fall within the protection scope of the present disclosure.
FIG. 1 is a schematic interaction diagram of a secure execution system for stored data according to an embodiment of the present disclosure.
FIG. 2 is a structure block diagram of a host according to an embodiment of the present disclosure.
FIG. 3 is a block diagram illustrating a functional unit of a secure execution apparatus for stored data according to an embodiment of the present disclosure.
FIG. 4 is a schematic diagram illustrating a sub-module of a loading unit according to an embodiment of the present disclosure.
FIG. 5 is a schematic diagram illustrating a sub-module of a loading unit according to an embodiment of the present disclosure.
FIG. 6 is a flow chart showing a secure execution method for stored data according to an embodiment of the present disclosure.

Reference signs: 100, secure execution apparatus for stored data; 200, first storage device; 300, second storage device; 101, host; 102, processor; 103, memory; 104, storage controller; 105, peripheral interface; 106, display module; 301, loading unit; 302, execution unit; 303, reading unit; 304, information transmitting unit; 305, first storage area; 306, second storage area; 401, detection sub-module; 402, reading sub-module; 403, first execution sub-module; 404, first loading sub-module; 501, second execution sub-module; 502, second loading sub-module; 503, third execution sub-module; 504, third loading sub-module.

### DETAILED DESCRIPTION

The technical solutions in the embodiments of the present disclosure will be clearly and completely described below in conjunction with the accompanying drawings in the embodiments of the present disclosure. Apparently, the described embodiments are merely a part of the embodiments of the present disclosure, rather than all the embodiments. The components in the embodiments of the present disclosure generally described and illustrated in the drawings herein can be arranged and designed in various different configurations. Therefore, the following detailed description of the embodiments of the present disclosure provided in the accompanying drawings is not intended to limit the scope of the protection of the present disclosure, but merely represents selected embodiments of the present disclosure. Based on the embodiments of the present disclosure, all other embodiments obtained by those skilled in the art without creative work shall fall within the protection scope of the present invention disclosure.

According to the secure execution method and system for stored data provided in the embodiments of the present disclosure, a secure execution method for stored data is provided, which can be applied to the host 101. The host can be a personal PC. The host 101 can be, but is not limited to, a smart phone, a personal computer (PC), a tablet computer, a personal digital assistant (PDA), a mobile Internet device (MID) or even a server, etc., which is not limited herein. The operating system of the host 200 can be, but is not limited to, an Android (Android) system, an iPhone operating system (IOS), a Windows phone system, a Windows system, etc. The host 101 is respectively communicatively connected with the first storage device 200 and the second storage device 300 to form a secure execution system for stored data.

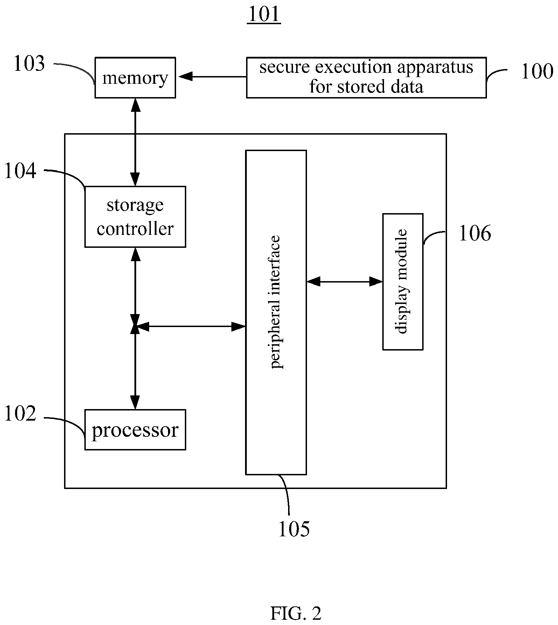

As shown in FIG. 2, which is a block diagram illustrating the host 101. The host 101 includes a secure execution apparatus 100 for stored data, a processor 102, a memory 103, a storage controller 104, a peripheral interface 105, and a display module 106.

The memory 103, the storage controller 104, and the processor 102 are directly or indirectly electrically connected to each other to implement data transmission or interaction. For example, these components can be electrically connected to each other through one or more communication buses or signal lines. The secure execution apparatus 100 for stored data includes at least one software function module capable of being stored in the memory 103 in a form of software or firmware, or being solidified in the operating system (OS) of the host 101. The processor 102 is configured to execute an executable module stored in the memory 103, for example, a software function module or a computer program included in the secure execution apparatus 100 for stored data.

The memory 103 can be, but is not limited to, random access memory (RAM), Read-Only Memory (ROM), Programmable Read-Only Memory (PROM), Erasable Programmable Read-Only Memory (EPROM), Electric Erasable Programmable Read-Only Memory (EEPROM), etc. The memory 103 is configured to store a program. The processor 102 executes the program after receiving an execution instruction. The method executed by the host 101 defined by the flow chart disclosed by any of the above-mentioned embodiments of the present disclosure can be applied to the processor 102, or implemented by the processor 102.

The processor 102 can be an integrated circuit chip with a signal processing capability. The above-mentioned processor 102 can be a general-purpose processor, and includes a Central Processing Unit (CPU), a Network Processor (NP), etc., or can be a Digital Signal Processor (DSP), an Application Specific Integrated Circuit (ASIC), Field programmable gate array (FPGA) or other programmable logic devices, a discrete gate or a transistor logic device, a discrete hardware component, by which the methods, steps, and logical block diagrams disclosed in the embodiments of the present disclosure can be implemented or executed. The general-purpose processor can be a microprocessor or any conventional processor or the like.

The peripheral interface 105 couples various inputs/input devices to the processor and the memory 103. In some embodiments, the peripheral interface 105, the processor 102, and the storage controller 104 can be implemented in a single chip, or can be implemented by independent chips in some other instances.

The display module 106 provides an interactive interface (such as a user operation interface) between the host 101 and the user or is configured to display image data to the user for reference. For example, a content of a webpage loaded by a browser installed in the host 101 can be displayed. The display module 106 can be a liquid crystal display or a touch display. If the display module 106 is a touch display, it can be a capacitive touch screen or a resistive touch screen that supports single-point and multi-touch operations. Support for single-point and multi-touch operations means that the touch display can sense touch operations simultaneously produced at one or more positions on the touch display, and the sensed touch operations are computed and processed by the processor 105.

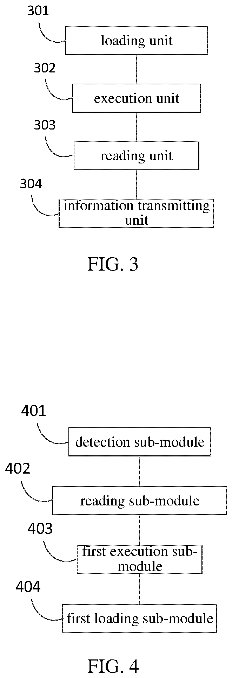

Referring to FIG. 3, an embodiment of the present disclosure provides a secure execution apparatus 100 for stored data. The secure execution apparatus 100 for stored data includes a loading unit 301, an execution unit 302, a reading unit 303, and an information transmitting unit 304.

The loading unit 301 is configured to load a security management program pre-stored in the first storage device 200 when detecting the first storage device 200.

In this embodiment, the security management program includes two parts, one part is a key management main program which reads encrypted user identity information stored on the second storage device 300 when operating, and then transmits the encrypted user identity information back to the first storage device 200 through the host 101, and the first storage device 200 is unlocked at this time. The other part is a boot program of the key management program, which is loaded by the BIOS of the host and is configured to load the key management program.

Specifically, as shown in FIG. 4, the loading unit 301 includes a detection sub-module 401, a reading sub-module 402, a first execution sub-module 403 and a first loading sub-module 404. The loading unit 301 can be a software apparatus operating in the BIOS.

The detection sub-module 401 is configured to detect the first storage device 200 when powered on.

The first storage device 200 can adopt a hard disk or an intelligent terminal with a built-in hard disk (for example, a notebook computer with a built-in hard disk). The first storage device 200 includes a first storage area 305 for storing the security management program, and a second storage area 306 for storing system data. The system data includes operating system data and user data. The first storage area 305 is configured to be accessed when the first storage device 200 is in a locked state; the second storage area 306 is configured to be accessed when the first storage device 200 is in an unlocked state. It should be noted that the initial state of the first storage device 200 is the locked state. When the first storage device 200 is in the locked state, the host 101 can only access the first storage area 305.

The reading sub-module 402 is configured to read the boot program stored in the first storage device 200 when detecting the first storage device 200. The first execution sub-module 403 is configured to execute the first boot program. The first loading sub-module 404 is configured to load the security management program pre-stored in the first storage device 200 after executing the first boot program.

The execution unit 302 is configured to execute the security management program and detect the second storage device 300.

The second storage device 300 can be a pluggable storage device, for example, a USB flash disk or a USB shield, which is not limited here.

The reading unit 303 is configured to read the encrypted identity information pre-stored in the second storage device 300 when detecting the second storage device 300.

Since the user identity key information is stored in the second storage device 300 in a cipher text and is transmitted to the second storage device 300 in the cipher text, accordingly the security of the user identity key information is guaranteed. In this embodiment, the user identity information can be encrypted with a private key in a public-private key pair of an asymmetric decryption algorithm to form user identity key information to store. In addition, the user identity information key can be encrypted with the public key by exchanging the public key of the public-private key pair before being transmitted to the second storage device 300 for storage. Such mode can ensure that each cipher text changes during a transmission process instead of a fixed cipher text, which can bring a greater security.

The information transmitting unit 304 is configured to transmit the encrypted identity information to the first storage device 200.

At this time, the first storage device 200 decrypts the identity information in the encrypted state, and determines whether the decrypted identity information is consistent with the pre-stored identity information. If they are the same, the verification is successful. At this time, the first storage device 200 is unlocked, and the second storage area 306 of the first storage device 200 can be directly accessed by the host 101.

The loading unit 301 is further configured to load system data after the first storage device 200 decrypts the identity information and verifies the identity information successfully.

Since the first storage device 200 is unlocked, the host 101 can directly access the system data in the second storage area 306 of the first storage device 200.

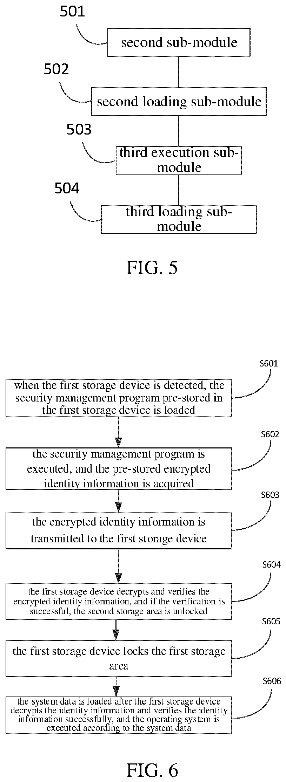

Specifically, as shown in FIG. 5, the loading unit 301 further includes a second execution sub-module 501, a second loading sub-module 502, a third execution sub-module 503, and a third loading sub-module 504.

The second execution sub-module 501 is configured to continue to execute the security management program after the first storage device 200 decrypts the identity information and verifies the identity information successfully.

The second loading sub-module 502 is configured to load a second boot program when executing the security management program.

The third execution sub-module 503 is configured to execute the second boot program.

The third loading sub-module 504 is configured to load system data when executing the second boot program.

The execution unit 302 is further configured to execute the operating system according to the system data.

Referring to FIG. 6, an embodiment of the present disclosure further provides a secure execution method for stored data. It should be noted that the basic principle and technical effects of the secure execution method for stored data provided in this embodiment are the same as those in the above-mentioned embodiment. For a brief description, for parts not mentioned in this embodiment, please refer to the corresponding content in the above-mentioned embodiment. The secure execution method for stored data includes following steps.

Step S601: when the first storage device 200 is detected, the security management program pre-stored in the first storage device 200 is loaded.

The first storage device 200 includes a first storage area 305 and a second storage area 306; the first storage device 200 is configured to make an externally visible space be the first storage area 305 after starting up; and the first storage area 305 is configured to pre-store the security management program. When a size of an external access data address is greater than a size of the first storage area 305, any data is returned. At this time, the second storage area 306 is in a locked state and is not externally visible. The second storage area 306 is actually a storage space that can be used externally, which can be visible and useable after being unlocked.

When the first storage device 200 is detected, the security management program pre-stored in the first storage area 305 is loaded. Specifically, the step S601 can include: the first storage device 200 is detected when powered on; the boot program stored in the first storage area 305 of the first storage device 200 is read; the first boot program is executed; and the security management program pre-stored in the first storage device 200 is loaded.

Step S602: the security management program is executed, and the pre-stored encrypted identity information is acquired.

For example, the security management program can be executed and the second storage device 300 can be detected. When the second storage device 300 is detected, the encrypted identity information pre-stored in the second storage device 300 is read. For another example, the security management program is executed and the encrypted identity information pre-stored by the host is read.

Step S603: the encrypted identity information is transmitted to the first storage device 200.

Step S604: the first storage device 200 decrypts and verifies the encrypted identity information, and if the verification is successful, the second storage area 306 is unlocked.

Step S605: the first storage device 200 locks the first storage area 305.

Step S606: the system data is loaded after the first storage device 200 decrypts the identity information and verifies the identity information successfully, and the operating system is executed according to the system data.

Specifically, the step S606 includes: after the first storage device 200 decrypts the identity information and verifies the identity information successfully, the security management program is continuously executed; the second boot program is loaded and executed; the system data is loaded and the operating system is executed.

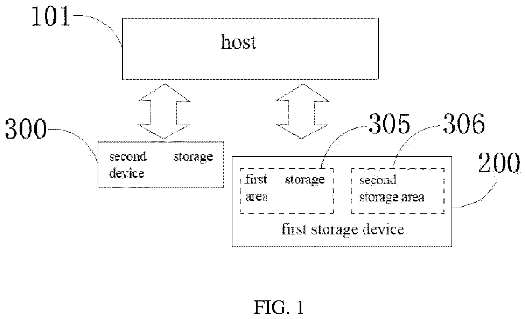

Referring to FIG. 1, an embodiment of the present disclosure further provides a secure execution system for stored data which includes a host 101, a first storage device 200, and a second storage device 300. The first storage device 200 and the second storage device 300 are respectively communicatively connected with the host 101; and the host 101 is configured to load a security management program pre-stored in the first storage device 200 when detecting the first storage device 200.

The host 101 is configured to execute the security management program and acquire pre-stored encrypted identity information.

The host 101 is configured to transmit the encrypted identity information to the first storage device 200.

The first storage device 200 is configured to decrypt and verify the identity information.

The host 101 is further configured to load system data after the first storage device 200 decrypts and verify the identity information successfully, and execute an operating system according to the system data.

The first storage device 200 can be a pluggable storage device. The first storage device 200 includes: a first storage area 305 configured to store a security management program; the first storage area 305 is in a locked state after the second storage area 305 is unlocked; the second storage area 306 is in a locked state before the identity information is decrypted and is verified successfully. The first storage device 200 can be a hard disk or an intelligent terminal with a built-in hard disk. When the first storage device 200 (that is, the second storage area 306) is in the locked state (that is, before the identity information is verified successfully), the storage area accessed by the host 101 is the first storage area 305. The size of the first storage area 305 is reserved based on the amount of data actually stored. When the amount of data accessed by the host 101 exceeds the size of the first storage device 200, all 0 data is directly returned. When the first storage device 200 is in the unlocked state (the second storage area 306 is in the unlocked state) (i.e., the identity information is verified successfully), the second storage area 306 can be accessed.

From the above, in the secure execution method and system for stored data provided by the present disclosure, the encrypted identity information pre-stored in the second storage device is read when the second storage device is detected; the encrypted identity information is transmitted to the first storage device; then the system data is loaded after the first storage device decrypts the identity information and verifies the identity information successfully; finally the operating system is executed according to the system data. Accordingly, there is no need to extend the BIOS while implementing the secure execution of the operating system, and there is no manual intervention, so the user experience is high; in addition, the security management program is pre-stored in the first storage device, the storage space of the host can be saved.

In the several embodiments provided by the present disclosure, it should be appreciated that the disclosed apparatus and method can also be implemented in other ways. The apparatus embodiments described above are merely exemplary. For example, the flow charts and block diagrams in the accompanying drawings show possible architectures, functions, and operations of the apparatus, method, and computer program product according to various embodiments of the present disclosure. In this regard, each block in the flow chart or block diagram can represent a module, a program segment, or a part of code, which include one or more executable instructions for implementing a specified logic function. It should also be noted that in some alternative implementations, a function marked in the block can also occur in a different order from the order indicated in the drawings. For example, two consecutive blocks can actually be executed in parallel, or can sometimes be executed in a reverse order, which depends on the functions involved. It should also be noted that each block in the block diagram and/or flow chart, and the combination of the blocks in the block diagram and/or flow chart, can be implemented by a dedicated hardware-based system that performs the specified functions or actions, or can be implemented by a combination of a dedicated hardware and computer instructions.

In addition, various function modules in the various embodiments of the present disclosure can be integrated together to form an independent part, or each module can exist alone, or two or more modules can be integrated to form an independent part.

If the function is implemented in the form of a software function module and sold or used as an independent product, the function can be stored in a computer readable storage medium. Based on this understanding, the technical solution of the present disclosure essentially or the part that contributes to the existing technology or the part of the technical solution can be embodied in the form of a software product, and the computer software product is stored in a storage medium, including several instructions configured to make a computer device (which may be a personal computer, a server, or a network device, etc.) execute all or part of the steps of the methods described in the various embodiments of the present disclosure. The above-mentioned storage medium includes: a U disk, a mobile hard disk, a Read-Only Memory (ROM), a Random Access Memory (RAM), a magnetic disk or an optical disk and other media that can store program codes. It should be noted that in this article, relationship terms such as first and second are merely used for distinguishing one entity or operation from another entity or operation, and do not definitely require or imply that there is any such actual relationship or order between these entities or operations. Moreover, the terms "include", "comprise" or any other variants thereof are intended to cover non-exclusive inclusion, so that a process, method, article, or device including a series of elements not only includes those elements, but also includes other elements which are not explicitly listed, or further includes elements inherent to this process, method, article or device. If there are no more restrictions, the element defined by the sentence "including a..." does not exclude the existence of other same elements in the process, method, article, or device that includes the elements.

The above descriptions are merely preferred embodiments of the present disclosure and are not intended to limit the present disclosure. For those skilled in the art, the present disclosure can have various modifications and variations. Any modification, equivalent replacement, improvement, etc., made within the scope of the present disclosure should be included in the protection scope of the present disclosure. It should be noted that similar reference signs and letters indicate similar items in the following figures. Therefore, once an item is defined in one figure, the item does not need to be further defined and explained in subsequent figures.

The above are merely specific embodiments of the present disclosure, but the protection scope of the present disclosure is not limited to this. Any person skilled in the art can easily conceive variations or replacements within the technical scope disclosed by the present disclosure, and these variations and replacements are all within the protection scope of the present disclosure. Therefore, the protection scope of the present disclosure should be subject to the appended claims.

It should be noted that in this article, relationship terms such as first and second are merely used for distinguishing one entity or operation from another entity or operation, and do not definitely require or imply that there is any such actual relationship or order between these entities or operations. Moreover, the terms "include", "comprise" or any other variants thereof are intended to cover non-exclusive inclusion, so that a process, method, article, or device including a series of elements not only includes those elements, but also includes other elements which are not explicitly listed, or further includes elements inherent to this process, method, article or device. If there are no more restrictions, the element defined by the sentence "including a..." does not exclude the existence of other same elements in the process, method, article, or device that includes the elements.

## Claims

1. A secure execution method for stored data, comprising:
loading (S601) a security management program pre-stored in a first storage device (200) when the first storage device (200) is detected;
executing (S602) the security management program and acquiring pre-stored encrypted identity information;
transmitting (S603) the encrypted identity information to the first storage device (200);
loading (S606) system data after the first storage device (200) decrypts the identity information and verifies the identity information successfully, and executing an operating system according to the system data;
wherein the first storage device (200) comprises a first storage area (305) and a second storage area (306), the first storage device (200) is configured to make an externally visible space be the first storage area (305) after starting up; and the first storage area (305) is configured to pre-store the security management program, and return any data when a size of an external access data address is greater than a size of the first storage area (305); the second storage area (306) at this moment is in a locked state and is external invisible; the second storage area (306) is an actual externally usable storage space, and is visible and usable after unlocking; the loading (S601) the security management program pre-stored in the first storage device (200) when the first storage device (200) is detected comprises:
loading the security management program pre-stored in the first storage area (305) when the first storage device (200) is detected;
the secure execution method for stored data further comprises:
before loading (S606) the system data after the first storage device decrypts the identity information and verifies the identity information successfully, and executing the operating system according to the system data,
decrypting and verifying, by the first storage device (200), the encrypted identity information, and unlocking the second storage area (306) if the encrypted identity information is verified successfully.

2. The secure execution method for stored data according to claim 1, wherein the executing (S602) the security management program and reading the pre-stored encrypted identity information comprises:
executing the security management program and detecting a second storage device (300), and reading the encrypted identity information pre-stored in the second storage device (300) when the second storage device (300) is detected.

3. The secure execution method for stored data according to claim 1, wherein the executing (S602) the security management program and reading the pre-stored encrypted identity information comprises:
executing the security management program and reading the encrypted identity information pre-stored in a host.

4. The secure execution method for stored data according to claim 1, further comprising:
locking (S605), by the first storage device (200), the first storage area (305) after unlocking the second storage area (306).

5. The secure execution method for stored data according to claim 1, wherein the loading (S601) the security management program pre-stored in the first storage device (200) when the first storage device (200) is detected comprises:
detecting the first storage device (200) when powered on;
reading a boot program stored in the first storage area (305) of the first storage device (200);
executing a first boot program;
loading the security management program pre-stored in the first storage device (200).

6. The secure execution method for stored data according to claim 1, wherein the loading (S606) system data after the first storage device decrypts the identity information and verifies the identity information successfully comprises:
continuing to execute the security management program after the first storage device (200) decrypts the identity information and verifies the identity information successfully;
loading and executing a second boot program;
loading the system data and executing the operating system.

7. A secure execution system for stored data, comprising a host (101) and a first storage device (200), the first storage device (200) being communicatively connected with the host (101), the first storage device (200) comprises a first storage area (305) and a second storage area (306); the first storage device (200) is configured to make an externally visible space be the first storage area (305) after starting up; and the first storage area (305) is configured to pre-store the security management program, and return any data when a size of an external access data address is greater than a size of the first storage area (305); the second storage area (306) at this moment is in a locked state and is external invisible; the second storage area (306) is an actual externally usable storage space, and is visible and usable after unlocking;
wherein the host (101) is configured to load a security management program pre-stored in the first storage device (200) when the first storage device (200) is detected;
the host (101) is configured to execute the security management program and acquire pre-stored encrypted identity information;
the host (101) is configured to transmit the encrypted identity information to the first storage device (200);
the first storage device (200) is configured to decrypt and verify the identity information;
the host (101) is further configured to load system data after the first storage device (200) decrypts the identity information and verifies the identity information successfully, and execute an operating system according to the system data;
the host (101) is further configured to load the security management program pre-stored in the first storage area (305) when the first storage device (200) is detected; and
the first storage device (200) is further configured to decrypt and verify the encrypted identity information, and unlock the second storage area (306) if the encrypted identity information is verified successfully, before loading the system data after the first storage device (200) decrypts the identity information and verifies the identity information successfully, and executing the operating system according to the system data.

8. The secure execution system for stored data according to claim 7, wherein the first storage area (305) is in a locked state after the second storage area (306) is unlocked;
the second storage area (306) is configured to store the system data, wherein the second storage area (306) is in a locked state before the identity information is decrypted and verified successfully.

9. The secure execution system for stored data according to claim 7, further comprising:
a second storage device (300), communicatively connected with the host (101) and configured to receive an information acquisition instruction transmitted by the host (101) after being detected by the host (101), and transmit the encrypted identity information to the host (101).

## Patentansprüche

1. Verfahren zur sicheren Ausführung für gespeicherte Daten, umfassend:
Laden (S601) eines in einer ersten Speichervorrichtung (200) vorgespeicherten Sicherheitsverwaltungsprogramms, wenn die erste Speichervorrichtung (200) detektiert wird;
Ausführen (S602) des Sicherheitsverwaltungsprogramms und Abrufen von vorab gespeicherten verschlüsselten Identitätsinformationen;
Übertragen (S603) der verschlüsselten Identitätsinformationen an die erste Speichervorrichtung (200);
Laden (S606) von Systemdaten, nachdem die erste Speichervorrichtung (200) die Identitätsinformationen entschlüsselt und die Identitätsinformationen erfolgreich verifiziert hat, und Ausführen eines Betriebssystems entsprechend den Systemdaten;
wobei die erste Speichervorrichtung (200) einen ersten Speicherbereich (305) und einen zweiten Speicherbereich (306) umfasst, die erste Speichervorrichtung (200) so konfiguriert ist, dass sie nach dem Starten einen von außen sichtbaren Raum zu dem ersten Speicherbereich (305) macht; und
der erste Speicherbereich (305) so konfiguriert ist, dass er das Sicherheitsverwaltungsprogramm vorspeichert und alle Daten zurückgibt, wenn eine Größe einer externen Zugriffsdatenadresse größer ist als eine Größe des ersten Speicherbereichs (305); der zweite Speicherbereich (306) sich zu diesem Zeitpunkt in einem gesperrten Zustand befindet und von außen nicht sichtbar ist; der zweite Speicherbereich (306) ein tatsächlich von au-ßen nutzbarer Speicherplatz ist und nach dem Entsperren sichtbar und nutzbar ist; das Laden (S601) des in der ersten Speichervorrichtung (200) vorgespeicherten Sicherheitsverwaltungsprogramms, wenn die erste Speichervorrichtung (200) detektiert wird, umfasst:
Laden des im ersten Speicherbereich (305) vorgespeicherten Sicherheitsverwaltungsprogramms, wenn die erste Speichervorrichtung (200) detektiert wird;
wobei das Verfahren zur sicheren Ausführung für gespeicherte Daten ferner umfasst:
vor dem Laden (S606) der Systemdaten, nachdem die erste Speichervorrichtung die Identitätsinformationen entschlüsselt und die Identitätsinformationen erfolgreich verifiziert hat, und Ausführen des Betriebssystems entsprechend den Systemdaten,
Entschlüsseln und Verifizieren der verschlüsselten Identitätsinformationen durch die erste Speichervorrichtung (200) und Entsperren des zweiten Speicherbereichs (306), wenn die verschlüsselten Identitätsinformationen erfolgreich verifiziert wurden.

2. Verfahren zur sicheren Ausführung für gespeicherte Daten nach Anspruch 1, wobei das Ausführen (S602) des Sicherheitsverwaltungsprogramms und das Lesen der vorgespeicherten verschlüsselten Identitätsinformationen umfasst:
Ausführen des Sicherheitsverwaltungsprogramms und Detektieren einer zweiten Speichervorrichtung (300) und Lesen der verschlüsselten Identitätsinformationen, die in der zweiten Speichervorrichtung (300) vorgespeichert sind, wenn die zweite Speichervorrichtung (300) detektiert wird.

3. Verfahren zur sicheren Ausführung für gespeicherte Daten nach Anspruch 1, wobei das Ausführen (S602) des Sicherheitsverwaltungsprogramms und das Lesen der vorgespeicherten verschlüsselten Identitätsinformationen umfasst:
Ausführen des Sicherheitsverwaltungsprogramms und Lesen der verschlüsselten Identitätsinformationen, die zuvor in einem Host gespeichert wurden.

4. Verfahren zur sicheren Ausführung für gespeicherte Daten nach Anspruch 1, ferner umfassend:
Sperren (S605) des ersten Speicherbereichs (305) durch die erste Speichervorrichtung (200) nach dem Entsperren des zweiten Speicherbereichs (306).

5. Verfahren zur sicheren Ausführung für gespeicherte Daten nach Anspruch 1, wobei das Laden (S601) des in der ersten Speichervorrichtung (200) vorgespeicherten Sicherheitsverwaltungsprogramms, wenn die erste Speichervorrichtung (200) detektiert wird, umfasst:
Detektieren der ersten Speichervorrichtung (200) im eingeschalteten Zustand;
Lesen eines in dem ersten Speicherbereich (305) der ersten Speichervorrichtung (200) gespeicherten Boot-Programms;
Ausführen eines ersten Bootprogramms;
Laden des in der ersten Speichervorrichtung (200) vorgespeicherten Sicherheitsverwaltungsprogram ms.

6. Verfahren zur sicheren Ausführung für gespeicherte Daten nach Anspruch 1, wobei das Laden (S606) von Systemdaten, nachdem die erste Speichervorrichtung die Identitätsinformationen entschlüsselt und die Identitätsinformationen erfolgreich verifiziert hat, umfasst:
Fortsetzen der Ausführung des Sicherheitsverwaltungsprogramms, nachdem die erste Speichervorrichtung (200) die Identitätsinformationen entschlüsselt und die Identitätsinformationen erfolgreich verifiziert hat;
Laden und Ausführen eines zweiten Bootprogramms;
Laden der Systemdaten und Ausführen des Betriebssystems.

7. System zur sicheren Ausführung für gespeicherte Daten, das einen Host (101) und eine erste Speichervorrichtung (200) umfasst, wobei die erste Speichervorrichtung (200) kommunikativ mit dem Host (101) verbunden ist und die erste Speichervorrichtung (200) einen ersten Speicherbereich (305) und einen zweiten Speicherbereich (306) umfasst; die erste Speichervorrichtung (200) so konfiguriert ist, dass sie nach dem Starten einen von au-ßen sichtbaren Raum zum ersten Speicherbereich (305) macht; und der erste Speicherbereich (305) so konfiguriert ist, dass er das Sicherheitsverwaltungsprogramm vorspeichert und alle Daten zurückgibt, wenn eine Größe einer externen Zugriffsdatenadresse größer ist als eine Größe des ersten Speicherbereichs (305); der zweite Speicherbereich (306) sich zu diesem Zeitpunkt in einem gesperrten Zustand befindet und von außen nicht sichtbar ist; der zweite Speicherbereich (306) ein tatsächlich von au-ßen nutzbarer Speicherplatz ist, der nach dem Entsperren sichtbar und nutzbar ist;
wobei
der Host (101) so konfiguriert ist, dass er ein in der ersten Speichervorrichtung (200) vorgespeichertes Sicherheitsverwaltungsprogramm lädt, wenn die erste Speichervorrichtung (200) detektiert wird;
der Host (101) so konfiguriert ist, dass er das Sicherheitsverwaltungsprogramm ausführt und vorab gespeicherte verschlüsselte Identitätsinformationen erfasst;
der Host (101) so konfiguriert ist, dass er die verschlüsselten Identitätsinformationen an die erste Speichervorrichtung (200) übermittelt;
die erste Speichervorrichtung (200) so konfiguriert ist, dass sie die Identitätsinformationen entschlüsselt und verifiziert;
der Host (101) ferner so konfiguriert ist, dass er Systemdaten lädt, nachdem die erste Speichervorrichtung (200) die Identitätsinformationen entschlüsselt und die Identitätsinformationen erfolgreich verifiziert hat, und ein Betriebssystem entsprechend den Systemdaten ausführt;
der Host (101) ferner so konfiguriert ist, dass er das in dem ersten Speicherbereich (305) vorgespeicherte Sicherheitsverwaltungsprogramm lädt, wenn die erste Speichervorrichtung (200) detektiert wird; und
die erste Speichervorrichtung (200) ferner konfiguriert ist, um die verschlüsselten Identitätsinformationen zu entschlüsseln und zu verifizieren und den zweiten Speicherbereich (306) zu entsperren, wenn die verschlüsselten Identitätsinformationen erfolgreich verifiziert wurden, bevor die Systemdaten geladen werden, nachdem die erste Speichervorrichtung (200) die Identitätsinformationen entschlüsselt und die Identitätsinformationen erfolgreich verifiziert hat, und das Betriebssystem entsprechend den Systemdaten ausgeführt wird.

8. System zur sicheren Ausführung für gespeicherte Daten nach Anspruch 7, wobei der erste Speicherbereich (305) in einem gesperrten Zustand ist, nachdem der zweite Speicherbereich (306) entsperrt wurde;
der zweite Speicherbereich (306) so konfiguriert ist, dass er die Systemdaten speichert, wobei der zweite Speicherbereich (306) in einem gesperrten Zustand ist, bevor die Identitätsinformationen erfolgreich entschlüsselt und verifiziert werden.

9. System zur sicheren Ausführung für gespeicherte Daten nach Anspruch 7, ferner umfassend:
eine zweite Speichervorrichtung (300), die kommunikativ mit dem Host (101) verbunden ist und so konfiguriert ist, dass sie eine Informationserfassungsanweisung empfängt, die von dem Host (101) übertragen wird, nachdem sie von dem Host (101) detektiert wurde, und die verschlüsselten Identitätsinformationen an den Host (101) überträgt.

## Revendications

1. Procédé d'exécution sécurisé pour des données stockées, consistant à :
charger (S601) un programme de gestion de la sécurité préenregistré dans un premier dispositif de stockage (200) lorsque le premier dispositif de stockage (200) est détecté ;
exécuter (S602) le programme de gestion de la sécurité et acquérir des informations d'identité cryptées préenregistrées ;
transmettre (S603) les informations d'identité cryptées au premier dispositif de stockage (200) ;
charger (S606) des données système après que le premier dispositif de stockage (200) a décrypté les informations d'identité et vérifié les informations d'identité avec succès, et exécuter un système d'exploitation en fonction des données système ;
dans lequel le premier dispositif de stockage (200) comprend une première zone de stockage (305) et une seconde zone de stockage (306), le premier dispositif de stockage (200) est configuré pour faire en sorte qu'un espace visible de l'extérieur soit la première zone de stockage (305) après le démarrage ; et la première zone de stockage (305) est configurée pour préenregistrer le programme de gestion de la sécurité et renvoyer toutes les données lorsque la taille d'une adresse de données d'accès externe est supérieure à la taille de la première zone de stockage (305) ; la seconde zone de stockage (306) est à ce moment dans un état verrouillé et est invisible de l'extérieur ; la seconde zone de stockage (306) est un espace de stockage réel utilisable de l'extérieur et est visible et utilisable après déverrouillage; charger (S601) le programme de gestion de la sécurité préenregistré dans le premier dispositif de stockage (200) lorsque le premier dispositif de stockage (200) est détecté consiste à :
charger le programme de gestion de la sécurité préenregistré dans la première zone de stockage (305) lorsque le premier dispositif de stockage (200) est détecté ;
le procédé d'exécution sécurisé pour des données stockées consistant en outre à :
avant de charger (S606) les données système après que le premier dispositif de stockage a décrypté les informations d'identité et vérifié les informations d'identité avec succès, et d'exécuter le système d'exploitation en fonction des données système,
décrypter et vérifier, par le premier dispositif de stockage (200), les informations d'identité cryptées, et déverrouiller la seconde zone de stockage (306) si les informations d'identité cryptées ont été vérifiées avec succès.

2. Procédé d'exécution sécurisé pour des données stockées selon la revendication 1, dans lequel exécuter (S602) le programme de gestion de la sécurité et lire les informations d'identité cryptées préenregistrées comprend les opérations consistant à :
exécuter le programme de gestion de la sécurité et détecter un second dispositif de stockage (300), et lire les informations d'identité cryptées préenregistrées dans le second dispositif de stockage (300) lorsque le second dispositif de stockage (300) est détecté.

3. Procédé d'exécution sécurisé pour des données stockées selon la revendication 1, dans lequel exécuter (S602) le programme de gestion de la sécurité et lire les informations d'identité cryptées préenregistrées comprend les opérations consistant à :
exécuter le programme de gestion de la sécurité et lire les informations d'identité cryptées préenregistrées dans un hôte.

4. Procédé d'exécution sécurisé pour des données stockées selon la revendication 1, consistant en outre à :
verrouiller (S605), par le premier dispositif de stockage (200), la première zone de stockage (305) après avoir déverrouillé la seconde zone de stockage (306).

5. Procédé d'exécution sécurisé pour des données stockées selon la revendication 1, dans lequel charger (S601) le programme de gestion de la sécurité préenregistré dans le premier dispositif de stockage (200) lorsque le premier dispositif de stockage (200) est détecté comprend les opérations consistant à :
détecter le premier dispositif de stockage (200) lorsqu'il est mis sous tension ;
lire un programme d'amorçage stocké dans la première zone de stockage (305) du premier dispositif de stockage (200) ;
exécuter un premier programme d'amorçage ;
charger le programme de gestion de la sécurité préenregistré dans le premier dispositif de stockage (200).

6. Procédé d'exécution sécurisé pour des données stockées selon la revendication 1, dans lequel charger (S606) les données système après que le premier dispositif de stockage a décrypté les informations d'identité et vérifié les informations d'identité avec succès comprend les opérations consistant à :
continuer à exécuter le programme de gestion de la sécurité après que le premier dispositif de stockage (200) a décrypté les informations d'identité et vérifié les informations d'identité avec succès ;
charger et exécuter un second programme d'amorçage ;
charger les données système et exécuter le système d'exploitation.

7. Système d'exécution sécurisé pour des données stockées, comprenant un hôte (101) et un premier dispositif de stockage (200), le premier dispositif de stockage (200) étant relié de manière communicative à l'hôte (101), le premier dispositif de stockage (200) comprend une première zone de stockage (305) et une seconde zone de stockage (306) ; le premier dispositif de stockage (200) est configuré pour faire en sorte qu'un espace visible de l'extérieur soit la première zone de stockage (305) après le démarrage ; et la première zone de stockage (305) est configurée pour préenregistrer le programme de gestion de la sécurité et renvoyer toutes les données lorsque la taille d'une adresse de données d'accès externe est supérieure à la taille de la première zone de stockage (305) ; la seconde zone de stockage (306) est à ce moment dans un état verrouillé et est invisible de l'extérieur ; la seconde zone de stockage (306) est un espace de stockage réel utilisable de l'extérieur et est visible et utilisable après déverrouillage ;
dans lequel l'hôte (101) est configuré pour charger un programme de gestion de la sécurité préenregistré dans le premier dispositif de stockage (200) lorsque le premier dispositif de stockage (200) est détecté ;
l'hôte (101) est configuré pour exécuter le programme de gestion de la sécurité et acquérir des informations d'identité cryptées préenregistrées ;
l'hôte (101) est configuré pour transmettre les informations d'identité cryptées au premier dispositif de stockage (200) ;
le premier dispositif de stockage (200) est configuré pour décrypter et vérifier les informations d'identité ;
l'hôte (101) est en outre configuré pour charger des données système après que le premier dispositif de stockage (200) a décrypté les informations d'identité et vérifié les informations d'identité avec succès, et pour exécuter un système d'exploitation en fonction des données système ;
l'hôte (101) est en outre configuré pour charger le programme de gestion de la sécurité préenregistré dans la première zone de stockage (305) lorsque le premier dispositif de stockage (200) est détecté ; et
le premier dispositif de stockage (200) est en outre configuré pour décrypter et vérifier les informations d'identité cryptées, et déverrouiller la seconde zone de stockage (306) si les informations d'identité cryptées sont vérifiées avec succès, avant de charger les données système après que le premier dispositif de stockage (200) a décrypté les informations d'identité et vérifié les informations d'identité avec succès, et d'exécuter le système d'exploitation en fonction des données système.

8. Système d'exécution sécurisé pour des données stockées selon la revendication 7, dans lequel la première zone de stockage (305) est dans un état verrouillé après que la seconde zone de stockage (306) est déverrouillée ; la seconde zone de stockage (306) est configurée pour stocker les données du système, dans lequel la seconde zone de stockage (306) est dans un état verrouillé avant que les informations d'identité aient été décryptées et vérifiées avec succès.

9. Système d'exécution sécurisé pour des données stockées selon la revendication 7, comprenant en outre :
un second dispositif de stockage (300), relié de manière communicative à l'hôte (101) et configuré pour recevoir une instruction d'acquisition d'informations transmise par l'hôte (101) après avoir été détecté par l'hôte (101), et transmettre les informations d'identité cryptées à l'hôte (101).
